# EUROPEAN PATENT APPLICATION

(11) **EP 1 939 556 A1**
(43) Date of publication of application: **02.07.2008**
(21) Application number: 06797904.7
(22) Date of filing: 13.09.2006
(51) Int. Cl.: F25D 23/00, F16L 5/02, F25D 19/00, F25D 23/06

(54) **CASING STRUCTURE OF REFRIGERATING DEVICE AND SEALING METHOD FOR THE CASING**

(30) Priority: 29.09.2005 JP 2005283699
(71) Applicant: DAIKIN INDUSTRIES, LTD., Osaka-shi, Osaka 530-8323 (JP)
(72) Inventor: KITAMURA, Yoshinori, Kita-ku, Sakai-shi Osaka 591-8511 (JP); OSHITANI, Mitsuhiro, Kita-ku, Sakai-shi Osaka 591-8511 (JP)
(74) Representative: HOFFMANN EITLE
(86) International application number: PCT/JP2006/318154
(87) International publication number: WO 2007/037125

(57) **Abstract**

A casing **(11)** for use in a freezing container is provided with a through hole **(H)** for insertion of the piping of a refrigerant circuit therethrough. Each opening end of the through hole **(H)** is covered over with a respective mesh sheet **(31, 32).** With each opening end of the through hole **(H)** covered over with the mesh sheet **(31, 32),** the tip end of a filling nozzle **(33)** is inserted until it reaches the middle of the through hole **(H)** and a sealant material is injected. The injected sealant material is held back within the through hole **(H)** by each mesh sheet **(31, 32)** and, with the progress of the injection of the sealant material, the air present in the through hole **(H)** is purged out through each mesh sheet **(31, 32).**

## Description

### TECHNICAL FIELD

The present invention relates to a casing structure for a refrigeration system and to a sealing method for a refrigeration system casing. More specifically, this invention relates to a technology capable of providing sealing of enhanced airtightness.

### BACKGROUND ART

In the past, freezing containers, such as one disclosed, for example, in JP-AH08(1996)-337285, for use in marine transport or other transport have been known in the art. This type of freezing container includes a container casing having therein a freight compartment and a refrigeration system for providing cooling of the freight compartment.

The refrigeration system includes a refrigerant circuit formed by connecting, by refrigerant piping, a compressor, a condenser, an evaporator, et cetera, and a thermal insulation casing which provides separation between the freight compartment of the container casing (the inside of the container casing) and the outside of the container casing. The compressor, the condenser, et cetera are arranged outside the casing while on the other hand the evaporator, et cetera are arranged on the side of the freight compartment of the casing (in the inside of the freight compartment of the casing), and refrigerant piping is connected, via a through hole formed in the casing, to inside/outside the casing. And, a sealant material is filled in a gap defined between the hole wall of the through hole and the refrigerant piping for providing sealing.

### DISCLOSURE OF THE INVENTION

### PROBLEMS THAT THE INVENTION SEEKS TO OVERCOME

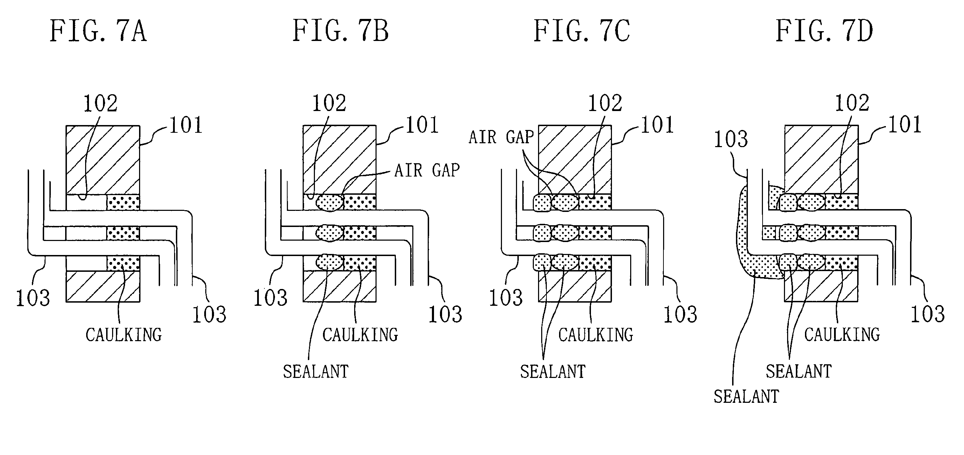

However, the problem with the seal method and the seal structure employed in the conventional refrigeration system is that it is likely that air bubbles and air gaps are created in a through hole **(102),** thereby leading to a drop in the airtightness. Referring now to Figure 7, the seal method employed in the conventional refrigeration system will be described below.

In the first place, refrigerant piping **(103)** is inserted through a through hole **(102)** formed in a wall **(101)** of the casing. This is followed by the closing of one opening of the through hole **(102)** with a caulking material (see Figure **7(A)****).** Subsequently, a sealant material is filled from the other opening of the through hole **(102)** so that a gap existing between the hole wall of the through hole **(102)** and the refrigerant piping **(103)** is filled with the filled sealant material (see Figure **7(B)** and Figure **7(C)****).** At that time, the sealant material is prevented from flowing out from within the through hole **(102)** because of blocking by the caulking material. And, sealant material is applied over to the opening end of the through hole **(102)** to seal it closed and, in addition, the applied sealant material is subjected to surface finish (see Figure **7(D)****).** In the way as described above, one of the openings of the through hole **(102)** is closed by the caulking material. Consequently, when sealant material is filled from the other opening of the through hole **(102),** the air present in the through hole **(102)** has nowhere to escape, thereby being confined therein. As a result, there is generated in the through hole **(102)** an air gap (air lock).

In view of the problem with the prior art, the present invention was made. Accordingly, an object of the present invention is to, in a structure and a method for providing sealing by filling a piping through hole formed in a freezing container casing with a sealant material, not only prevent the filled sealant material from flowing out from within the through hole, but also inhibit the generation of an air gap in the through hole.

### MEANS FOR OVERCOMING THE PROBLEMS

The present invention provides, as a first aspect, a casing structure for a refrigeration system, the refrigeration system comprising: (a) a casing **(11)** for use in a freezing container and (b) a refrigerant circuit, configured by piping connection of a compressor **(20)** and a condenser **(14)** which are arranged outside the casing **(11)** to an evaporator **(16)** which is arranged inside the casing **(11),** for providing cooling of the inside of the casing **(11).** The casing **(11)** is provided with a through hole **(H)** for insertion of piping of the refrigerant circuit; a gap existing between the hole wall of the through hole **(H)** and the piping of the refrigerant circuit is filled with a sealant material; and at least one end of the through hole **(H)** is covered over with a mesh member **(31, 32).**

In the first aspect of the present invention, the cargo to be transported by the freezing container is stowed in the casing **(11).** Refrigerant is circulated in the refrigerant circuit to operate a refrigeration cycle. At that time, the cargo in the casing **(11)** is cooled.

The through hole **(H)** of the casing **(11)** is filled with sealant material, with the piping of the refrigerant circuit inserted therethrough. At least one end of the through hole **(H)** is covered over with the mesh member **(31, 32).** Accordingly, when, with at least one end of the through hole **(H)** covered over with the mesh member **(31, 32),** sealant material is injected such that through hole **(H)** is filled from the inside thereof with the injected sealant material, the air present in the through hole **(H)** is purged out therefrom through the openings of the mesh members **(31, 32)** as the filling of the through hole **(H)** with sealant material progresses. In addition, the injected sealant material is gradually filled towards each end of the through hole **(H)** and is held back within the through hole **(H)** by the mesh members **(31, 32).** In other words, the sealant material is filled without the creation of air bubbles et cetera in the through hole **(H).**

The present invention provides, as a second aspect according to the first aspect, a refrigeration-system casing structure which is characterized in that the mesh member **(31, 32)** is provided with a piping hole for passage of the piping of the refrigerant circuit and a slit extending from the piping hole to an edge end of the mesh member **(31, 32).**

In the second aspect of the present invention, in mounting the mesh member **(31, 32)** with the piping of the refrigerant circuit inserted through the through hole **(H)** of the casing **(11),** the piping is passed through the slit of the mesh member **(31, 32)** into the piping hole of the mesh member **(31, 32).**

The present invention provides, as a third aspect according to the second aspect, a refrigeration-system casing structure which is characterized in that the mesh member **(31, 32)** comprises a plurality of plies each of which is provided with a respective slit which is formed and positioned so as not to overlap with that of the other ply of the mesh member **(31,32).**

In the third aspect of the present invention, the plies of the mesh member **(31, 32)** are stacked one upon the other at each end of the through hole **(H).** It is arranged such that, with the plies of the mesh member **(31, 32)** stacked one upon the other, their slits are not overlapped with each other. That is, the piles of the mesh member **(31, 32)** are provided with their slits at different positions so that the outside and the inside of the through hole **(H)** are prevented from communicating through the slits with each other, with the piles of the mesh member **(31, 32)** overlapped with each other. This prevents the filled sealant material from flowing out from within the through hole **(H)** by way of the slits.

The present invention provides, as a fourth aspect according to any one of the first to the third aspect, a refrigeration-system casing structure which is characterized in that the mesh member **(31, 32)** is mounted over each end of the through hole **(H),** and in that one of the mesh members **(31, 32)** is provided with a nozzle hole for insertion of a nozzle for injecting sealant material into the through hole **(H)** so that the through hole **(H)** is filled from the inside thereof with the injected sealant material.

In the fourth aspect of the present invention, the tip end of the sealant material filling nozzle is inserted through the nozzle hole of the mesh member **(31, 32)** into the through hole **(H).** Then, sealant material is injected into the through hole **(H).** At that time, it is ensured that the injected sealant material is held back within the through hole **(H)** because each end of the through hole **(H)** is covered over with the mesh member **(31, 32).**

The present invention provides, as a fifth aspect, a casing sealing method, intended for a refrigeration system comprising a casing **(11)** for use in a freezing container and a refrigerant circuit which is configured by piping connection of a compressor **(20)** and a condenser **(14)** which are arranged outside the casing **(11)** to an evaporator **(16)** which is arranged inside the casing **(11),** for sealing of a through hole **(H)** formed in the casing **(11)** and used for insertion of piping of the refrigerant circuit therethrough. The sealing method of the fifth aspect comprises a first step in which at least one opening end of the through hole **(H)** of the casing **(11)** is covered over with a mesh member **(31, 32)** and a second step subsequent to the first step in which sealant material is injected into the through hole **(H)** so that the through hole **(H)** is filled from the inside thereof with the injected sealant material.

In the fifth aspect of the present invention, the cargo to be transported by a freezing container is stowed in the casing **(11).** Refrigerant is circulated in the refrigerant circuit to operate a refrigeration cycle. At that time, the cargo in the casing **(11)** is cooled.

The first step is carried out before or after insertion of the piping of the refrigerant circuit into the through hole **(H)** of the casing **(11).** In other words, either one or each of the ends of the through hole **(H)** is covered over with the mesh member **(31, 32).** In the subsequent second step, sealant material is injected such that the through hole **(H)** is filled from the inside thereof with the injected sealant material. As the filling of the through hole **(H)** with sealant material progresses, the air present in the through hole **(H)** is purged out therefrom through the openings of the mesh members **(31, 32).** In addition, the injected sealant material is gradually filled towards each end of the through hole **(H)** and is held back within the through hole (H) by the mesh members (31, 32). In other words, the sealant material is filled without the creation of air bubbles et cetera in the through hole (H).

The present invention provides, as a sixth aspect according to the fifth aspect, a refrigeration-system casing sealing method which is characterized in that the mesh member **(31, 32)** is provided with a piping hole for insertion of the piping of the refrigerant circuit and a slit extending from the piping hole to an edge end of the mesh member **(31, 32),** and in that in the first step the piping of the refrigerant circuit is inserted through the slit of the mesh member **(31, 32)** into the piping hole of the mesh member **(31, 32).**

In the sixth aspect of the present invention, the mesh member **(31, 32)** is mounted over each end of the through hole **(H)** after insertion of the piping of the refrigerant circuit into the through hole **(H).** Stated another way, the already inserted piping is passed through the slit of the mesh member **(31, 32)** into the given piping hole.

The present invention provides, as a seventh aspect according to the sixth aspect, a refrigeration-system casing sealing method which is characterized in that the mesh member **(31, 32)** comprises a plurality of plies each of which is provided with a respective slit which is formed and positioned so as not to overlap with that of the other ply of the mesh member **(31, 32)** in the first step.

In the seventh aspect of the present invention, the inside and the outside of the through hole **(H)** are not in communication with each other through the slits. This prevents the injected sealant material from flowing out from within the through hole **(H).**

### ADVANTAGEOUS EFFECTS OF THE INVENTION

Therefore, in accordance with either the first or the fifth aspect of the present invention, it is arranged such that at least one end of the through hole **(H)** is covered over with the mesh member **(31, 32).** When sealant material is injected such that the through hole **(H)** is filled from the inside thereof with the injected material, the air present in the through hole **(H)** is purged out therethrough as the filling of the through hole **(H)** with sealant material progresses, while the injected sealant material is prevented, by the mesh members **(31, 32),** from flowing out from within the through hole **(H).** Accordingly, the through hole **(H)** is filled with sealant material without the creation of air gaps, thereby making it possible to provide sealing of high airtightness. Besides, the leakage of sealant material is prevented, thereby making it possible that the through hole **(H)** is filled with as much as the amount of sealant material actually injected thereinto, and the filling time (sealing time) can be reduced.

Especially, in accordance with the fourth aspect of the present invention, each opening end of the through hole **(H)** is covered over with the mesh member **(31, 32).** In this case, one of the mesh members **(31, 32)** is provided with a nozzle hole for insertion of the nozzle from which sealant material is injected such that the through hole **(H)** is filled from the inside thereof with the injected sealant material. This makes it possible to ensure that sealant material is injected in the middle of the through hole **(H)** while the injected sealant material is held back within the through hole **(H)** by each mesh member **(31, 32).**

In addition, in accordance with either the second or the sixth aspect of the present invention, the slit is provided so as to associate with the piping hole in the mesh member **(31, 32),** thereby making it possible to achieve easy mount of the mesh member **(31, 32)** over the opening end, even with the piping et cetera already inserted through the through hole **(H).** Accordingly, even in the case where, because of its complicated configuration, it is difficult to pass the piping into the through hole **(H)** after mounting the mesh member **(31, 32)** over the opening end, the piping et cetera can be passed into the through hole **(H)** before mounting the mesh member **(31, 32).** In other words, the workability of piping is enhanced.

Additionally, in accordance with either the third or the seventh aspect of the present invention, the mesh member **(31, 32)** is composed of a plurality of plies having respective slits formed and positioned so as not to overlap with each other, thereby making it possible to prevent the filled sealant material from flowing out by way of the slits. Therefore, it becomes possible to hold back the filled sealant material without fail while enhancing the workability of piping as described above.

### BRIEF DESCRIPTION OF THE DRAWINGS

Figure **1** is a perspective diagram illustrating a freezing container according to an embodiment of the present invention;
Figure **2** is a cross-sectional diagram taken along line A-A in Figure **1****;**
Figure **3** is a cross-sectional diagram illustrating a method for sealing of a through hole in a casing;
Figure **4** is a top plan diagram illustrating a first mesh sheet according to the embodiment;
Figure **5** is a top plan diagram illustrating a second mesh sheet according to the embodiment;
Figure **6** is a top plan diagram illustrating an overlapping state of the second mesh sheet on the first mesh sheet, when viewed from the side of the second mesh sheet; and
Figure **7** is a cross-sectional diagram illustrating a method for sealing of a through hole in a conventional casing.

### INDEX OF REFERENCE SIGNS IN THE DRAWINGS

10: freezing container
11: casing
14: condenser
16: evaporator
20: compressor
31: first mesh sheet (mesh member)
32: second mesh sheet (mesh member)
ph1-3: piping hole
SL1-3: slit
nh: nozzle hole
H: through hole

### BEST MODE FOR CARRYING OUT THE INVENTION

With reference to the drawings, an embodiment of the present invention is now described in detail below.

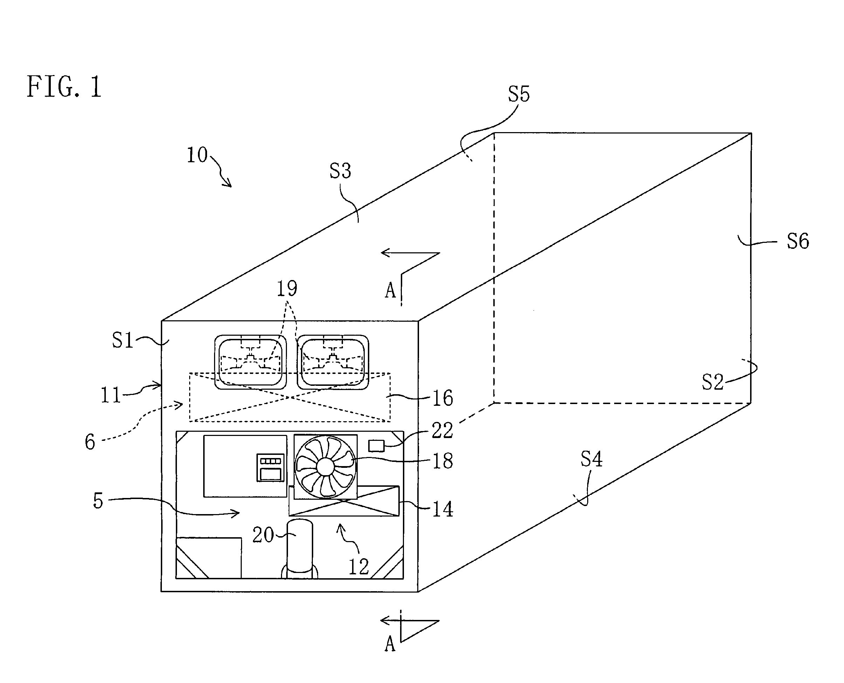

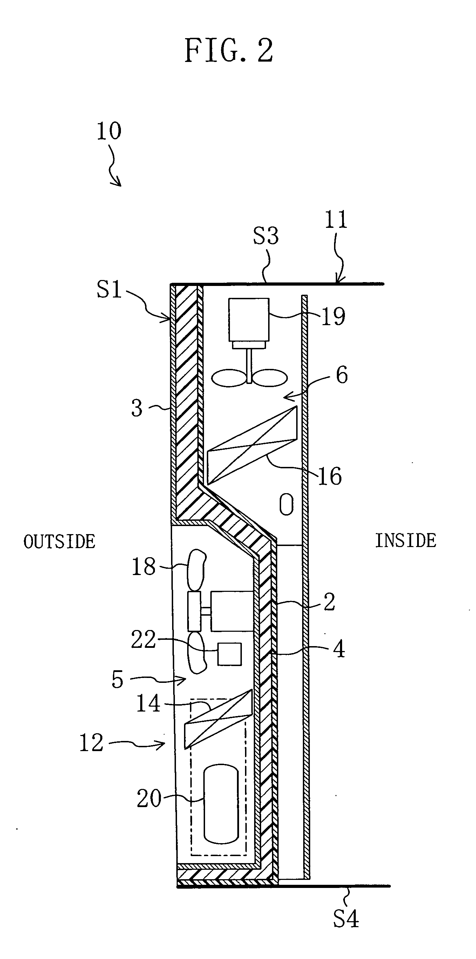

As shown in Figures **1** and **2**, a freezing container **(10)** of the present embodiment is adapted for transportation by a container vessel or vehicle and its freight is kept cool during the transportation. The freezing container **(10)** includes a casing (**11)** having a compartment in which to contain freight, and a refrigeration system **(12)** operable to provide cooling of the inside (compartment) of the casing (11).

The casing **(11)** has a front side panel **(S1),** a rear side panel **(S2),** a top side panel **(S3),** a bottom side panel **(S4),** a left-hand side panel **(S5),** a right-hand side panel **(S6)**. The casing **(11)** is formed substantially in the shape of a rectangular parallelepiped. Note that, in Figure 1, the near side is the front side, the far side is the rear side, and the direction of right and left is the direction when viewed from the front side.

Each of the panels **(S1)** to **(S6)** is a laminate composed of an inner side panel **(2),** an outer side panel **(3),** and a thermal insulation layer **(4).** The inner side panel **(2)** is positioned on the inside of the casing **(11).** The outer side panel **(3)** is positioned on the outside of the casing **(11).** The thermal insulation layer **(4)** is interposed between the inner side panel **(2)** and the outer side panel **(3).**

For example, the inner side panel **(2)** is a 3 mm thick synthetic resin panel made of synthetic resin. The outer side panel **(3)** is a 3 mm thick metal panel made of aluminum alloy or other suitable material. The thermal insulation layer **(4)** is formed by filling a foamable thermal insulation material (such as urethane et cetera) between the inner side panel **(2)** and the outer side panel **(3).** The thermal insulation layer **(4)** is 50 mm thick.

The lower half portion of the front side panel **(S1)** is a recessed portion that is recessed towards the casing compartment. In other words, an out-compartment concave portion **(5)** is defined in the lower half portion of the front side panel **(S1)** on the outside of the container compartment while on the other hand an in-compartment concave portion **(6)** is defined in the upper half portion of the front side panel **(S1)** on the inside of the container compartment.

The refrigeration system **(12)** is provided with a refrigerant circuit (not shown). The refrigerant circuit includes a compressor **(20),** a condenser **(14),** an expansion mechanism **(22),** and an evaporator **(16)** which are connected in the given order by piping. This refrigerant circuit is filled with refrigerant and is configured such that the refrigerant is circulated therethrough to operate a refrigeration cycle. In addition, the refrigeration system **(12)** is provided with an out-compartment fan **(18)** for supplying air to the condenser **(14)** and an in-compartment fan **(19)** for supplying air to the evaporator **(16).** And, the compressor **(20),** the condenser **(14),** the expansion mechanism **(22),** and the out-compartment fan (18) are arranged in the out-compartment concave portion **(5)** of the front side panel **(S1)**. On the other hand, the evaporator **(16)** and the in-compartment fan **(19)** are arranged in the in-compartment concave portion **(6)** of the front side panel **(S1)**.

The running operation of the refrigeration system **(12)** is now described. Refrigerant discharged from the compressor **(20)** flows to the condenser **(14),** exchanges heat with air supplied by the out-compartment fan **(18),** and is condensed to a liquid refrigerant. This liquid refrigerant is decompressed in the expansion mechanism **(22)** and then flows to the evaporator **(16)** arranged on the compartment side. In the evaporator **(16),** the liquid refrigerant exchanges heat with air supplied by the in-compartment fan **(19)** and is evaporated whereby the air is cooled. This cooled air is supplied into the compartment to effect cooling of the freight. The evaporated refrigerant is returned back to the compressor. Such a circulation is repeatedly performed.

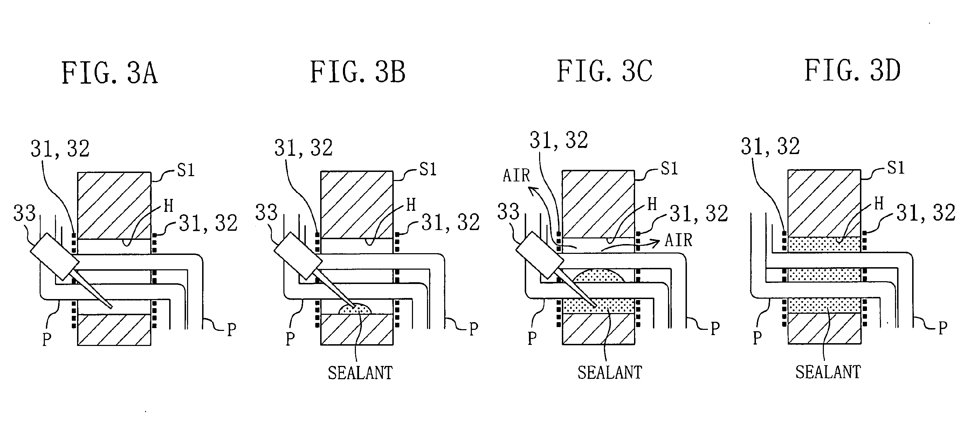

As shown in Figure 3, the front side panel **(S1)** is provided with a through hole **(H)** in the shape of a circle. Piping and wiring of the refrigerant circuit are inserted through the through hole **(H)** for extension to inside/outside the compartment. The through hole **(H)** is sealed closed with sealant material filled in a gap between the hole wall of the through hole (H) and the piping et cetera.

The structure for sealing of the through hole **(H)** will be more concretely described. Each opening end of the through hole **(H)** is covered with a two-ply mesh sheet **(31, 32)** which is a laminate of two different mesh sheets. The mesh sheet **(31, 32)** is a laminate of two mesh members, namely a first mesh sheet **(31)** and a second mesh sheet **(32).** That is, the mesh sheet **(31, 32)** is mounted over each opening end of the through hole **(H),** with the second mesh sheet **(32)** positioned inside and the first mesh sheet **(31)** positioned outside.

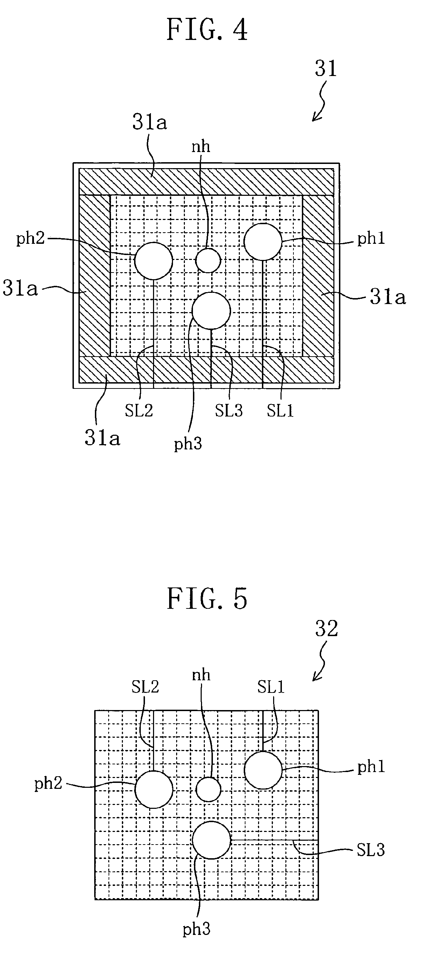

As shown in Figure **4****,** the first mesh sheet **(31)** is formed in the shape of a square or rectangle, and is provided, at the edge end of each side thereof, with an adhesive tape strip **(31a).** As shown in Figure **5****,** the second mesh sheet **(32)** is formed in the shape of a smaller square or rectangle as compared to the first mesh sheet **(31),** and is adhered to the first mesh sheet **(31),** with the edge ends of the sides thereof overlapped respectively with the inner side portions of the adhesive tape strips **(31a)** of the first mesh sheet **(31).** Stated another way, the first mesh sheet **(31)** is adhered, by the outer side portions of the adhesive tape strips **(31a)** that are not overlapped with the second mesh sheet **(32),** to the opening peripheral edge of the through hole **(H).**

Both the first mesh sheet **(31)** and the second mesh sheet **(32)** in the present embodiment are made of resin, and have mesh holes formed in the shape of a rectangle. The size of the mesh holes is so determined taking into account properties such as the viscosity property of sealant material that the sealant material filled in the through hole **(H)** is prevented from flowing out from within the through hole **(H)** through the mesh holes. In the present embodiment, the horizontal and vertical size of the mesh holes is from 0.05 to 1.5 mm. In addition, the first and the second mesh sheet **(31)** and **(32)** are each provided with a plurality of piping holes **(ph1-ph3)** for the passage of piping (P) and wiring (three piping holes in the present embodiment). And, the through hole (H) closed by the mesh sheets **(31, 32)** is filled with sealant material. This seals a gap defined between the hole wall of the through hole **(H)** and the piping **(P)** et cetera. Also note that, in Figures **4** and **5****,** piping holes of the piping holes **(ph1-ph3)** through which the same piping **(P)** et cetera are passed are assigned the same reference numeral. In addition, the shape of the mesh holes of the mesh sheet **(31, 32)** is not limited to the shape of a rectangle. The mash hole shape may be a square, circle, ellipse or other shape. Still in addition, the mesh sheet **(31, 32)** may be made of metal, in consideration of the durability.

The mesh sheet **(31, 32)** is provided with slits **(SL1-SL3)** corresponding respectively to the piping holes **(ph1-ph3).** More specifically, the slits **(SL1-SL3)** of the first mesh sheet **(31)** extend straight respectively from their associated piping holes **(ph1-ph3)** to the lower side, as shown in Figure **4****.** Also note that the adhesive tape strip **(31a)** is also provided, at its portions corresponding respectively to the slits (SL1-SL3), with slits. In the second mesh sheet **(32),** the slit **(SL1)** of the piping hole **(ph1)** and the slit **(SL2)** of the piping hole **(ph2)** extend straight to the upper side respectively from the piping holes **(ph1, ph2),** as shown in Figure **5****,** and the slit **(SL3)** of the remaining piping hole **(ph3)** extends straight to the left-hand side from the piping hole **(ph3),** as shown in Figure **5****.**

By virtue of the slits **(SL1-SL3)** provided in the way as described above, it becomes possible to easily mount the mesh sheet **(31, 32)** to over the opening end of the through hole **(H)** by placing the piping **(P)** et cetera into a given piping hole of the piping holes **(ph1-ph3)** through a given slit of the slits **(SL1-SL3),** with the piping **(P)** et cetera passed through the through hole **(H).**

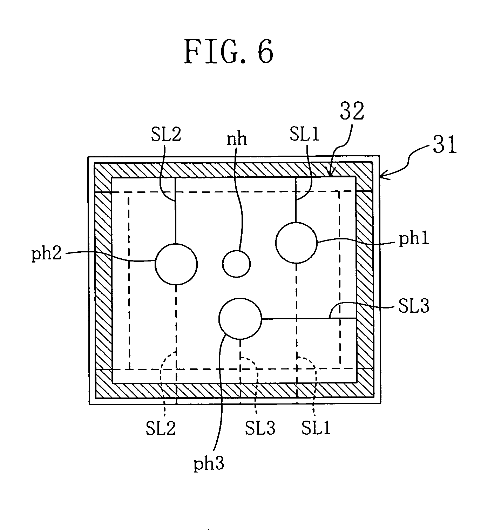

In addition, as pointed out above, the first mesh sheet (31) and the second mesh sheet **(32)** differ from each other in that the slits **(SL1-SL3)** of the former are positioned differently from the slits **(SL1-SL3)** of the latter. More specifically, the position where the slits **(SL1-SL3)** are formed is so determined that the slits **(SL1-SL3)** of the first mesh sheet (31) and the slits **(SL1-SL3)** of the second mesh sheet **(32)** do not coincide with each other when the first mesh sheet **(31)** and the second mesh sheet **(32)** are stacked one upon the other (see Figure **6****).**

As a result of the above arrangement, the slits **(SL1-SL3)** of one of the first and the second mesh sheet **(31)** and **(32)** are blocked by the other of the first and the second mesh sheet **(31)** and **(32),** and the inside and the outside of the through hole **(H)** are not in communication with each other, thereby making it possible to prevent the filled sealant material from flowing out through the slits **(SL1-SL3).** The slit **(SL1)** of the first mesh sheet **(31)** crosses, at one point, the slit **(SL3)** of the second mesh sheet **(32),** which however hardly causes sealant material to flow out from the cross point. In addition, the slits **(SL1-SL3)** are formed in the shape of a straight line in the present embodiment. However, the shape of the slits **(SL1-SL3)** is not limited to the shape of a straight line. Any shape may suffice as long as it is able to prevent the outflow of sealant material.

Next, referring to Figures **3** and **4****,** the method for sealing of the through hole **(H)** will be described in detail.

In the first place, piping **(P)** and wiring are passed into the through hole **(H)** of the front side panel **(S1).** Then, the two-ply mesh sheets **(31, 32)** are adhered so as to respectively cover the opening ends of the through hole (H), as shown in Figure **3(A)****.** At that time, the piping **(P)** et cetera are passed into the given piping holes **(ph1-ph3)** through the slits **(SL1-SL3)** of the mesh sheet **(31, 32).**

Subsequently, the tip end of a sealant-material filling nozzle **(33)** is inserted up to the lengthwise middle of the through hole **(H)** and sealant material is injected from the nozzle tip end (see Figure **3(B)****).** That is, the filling of the through hole **(H)** with sealant material begins at the middle of the through hole **(H).** Here, one of the mesh sheets **(31, 32)** is provided with a nozzle hole **(nh)** for insertion of the tip end of the filling nozzle **(33)** up to the middle of the through hole **(H).** The tip end diameter of the filling nozzle **(33)** is 4 mm.

As sealant material is continuously injected from the filling nozzle **(33),** the through hole **(H)** is gradually filled with the injected sealant material from the middle towards each opening end. With the progress of the filling of the through hole **(H)** with sealant material, the air present in the through hole **(H)** is gradually purged out through the mesh sheets **(31, 32)** on the both sides (see Figure **3(C)****).** At that time, the sealant material injected from the filling nozzle **(33)** will not flow out through the mesh sheets **(31, 32)** on the both sides, thereby ensuring that the through hole **(H)** is filled with as much as the amount of sealant material actually injected thereinto. To sum up, the air present in the through hole **(H)** is purged out through the mesh sheets **(31, 32)** of the present embodiment at the time of sealant material filling and the filled sealant material is held back within the through hole **(H)** by the mesh sheets **(31, 32)** so that it is prevented from flowing out from within the through hole **(H).** And, when the entire through hole **(H)** is filled up with sealant material, the sealing process is completed (see Figure **3(D)****).**

The mesh sheets **(31, 32)** will remain mounted over the opening ends even after the sealing process is over. This ensures that the filled sealant material is held back within the through hole **(H).**

The filled sealant material hardens by its volatile substance changing into a gas. Since both the opening ends are covered over with the mesh sheets **(31, 32),** this expedites the evaporation of the volatile substance as compared to the case where only one opening end is closed. This reduces the time taken to harden the sealant material.

In the present embodiment, the description has been made regarding the case where the mesh sheets **(31, 32)** are mounted after passage of the piping **(P)** et cetera into the through hole **(H).** The slits **(SL1-SL3)** may not be provided unless the arrangement that the piping **(P)** et cetera are inserted through the through hole **(H)** after mounting of the mesh sheets **(31, 32)** and passed into the given piping holes **(ph1-ph3)** in the mesh sheets (31, 32), will cause any problem. And, in this case, there is no need to use the two-ply mesh sheet (31, 32). That is, it suffices if the opening ends are each covered over with a single-ply mesh sheet.

In addition, it is arranged in the present embodiment such that each opening end of the through hole **(H)** is covered over with the mesh sheet **(31, 32).** However, alternatively it may be arranged such that only one opening end is covered over with the mesh sheet **(31, 32).** In this case, the tip end of the filling nozzle **(33)** is inserted up to the middle of the through hole **(H)** from the other opening end not covered over with any mesh sheet, and the through hole **(H)** is filled from the middle towards each opening end with sealant material.

In addition, when the sealant material comes to have a predetermined hardness after completion of the sealing process, the mesh sheets **(31, 32)** may be removed so as to avoid disfigurement. At that time, the mesh sheets **(31, 32)** are easily detached because of the slits **(SL1-SL3)** which prevent interfere with the piping **(P)** et cetera. Furthermore, the surface of the filled sealant material is substantially flat and smooth since it is held back by the mesh sheets **(31, 32).** This eliminates the need to subject the filled sealant material to surface finishing.

Still in addition, it is arranged in the present embodiment such that each opening end of the through hole **(H)** is covered over by the two-ply mesh sheet **(31, 32).** Needless to say, a three- or more-ply mesh sheet may be employed instead of the two-ply mesh sheet.

### ADVANTAGEOUS EFFECTS OF THE EMBODIMENT

As described above, in accordance with the present embodiment each of the opening ends of the through hole **(H)** is covered over with the mesh sheet **(31, 32)** and sealant material is injected staring at the middle of the through hole **(H),** thereby making it possible that the air present in the through hole **(H)** is purged out with the progress of the sealant material injection while the mesh sheets **(31, 32)** prevent the filled sealant material from flowing out from within the through hole **(H).** This makes it possible to fill the through hole **(H)** with sealant material, without the generation of air gaps, thereby making it possible to accomplish sealing of high air tightness. Furthermore, since the leakage of sealant material is prevented, thereby making it possible that the through hole **(H)** is filled with as much as the amount of sealant material actually injected thereinto, and the filling time (sealing time) can be reduced.

In addition, in the mesh sheet **(31, 32),** the slits **(SL1-SL3)** are provided so that they are associated respectively with the piping holes **(ph1-ph3).** This makes it possible to easily attach the mesh sheet **(31, 32)** to over each opening end, with the piping **(P)** et cetera already passed into the through hole **(H).** Accordingly, even in the case where, because of its complicated configuration, it is difficult to pass the piping **(P)** into the through hole **(H)** after mounting the mesh member **(31, 32)** over the opening end, the piping et cetera can be passed into the through hole **(H)** before mounting the mesh member **(31, 32).**

Still in addition, the mesh sheet **(31, 32),** which is a laminate of two plies each of which is provided with the slits **(SL1-SL3)** which are formed and positioned so as not to overlap with the slits **(SL1-SL3)** of the other ply of the mesh member **(31, 32),** is employed, which makes it possible to prevent the filled sealant material from flowing out through the slits **(SL1-SL3).** Accordingly, it is ensured that the filled sealant material is held back while enhancing the workability of the piping **(P).**

Yet in addition, the filled sealant material is held back in place by the mesh sheets **(31, 32),** thereby eliminating the conventional need to subject the surface of sealant material exposed at the opening end to surface finishing. This makes it possible to further reduce the sealing time.

In addition, since each of the opening ends of the through hole **(H)** is covered over with the mesh sheet **(31, 32),** this makes it possible to expedite the evaporation of a volatile component in the sealant material as compared to the case where the opening ends are closed. As a result, the time taken for the sealant material to harden is reduced, thereby making it possible to further reduce the sealing time.

It should be noted that the above-described embodiments are essentially preferable exemplifications which are not intended in any sense to limit the scope of the present invention, its application, or its application range.

### INDUSTRIAL APPLICABILITY

As has been described above, the present invention is useful as a casing structure for a freezing-container refrigeration system.

## Claims

1. A casing structure for a refrigeration system, the refrigeration system comprising:
(a) a casing **(11)** for use in a freezing container and (b) a refrigerant circuit, configured by piping connection of a compressor **(20)** and a condenser **(14)** which are arranged outside the casing **(11)** to an evaporator **(16)** which is arranged inside the casing **(11),** for providing cooling of the inside of the casing **(11);**
wherein the casing **(11)** is provided with a through hole **(H)** for insertion of piping of the refrigerant circuit, wherein a gap existing between the hole wall of the through hole **(H)** and the piping of the refrigerant circuit is filled with a sealant material, and wherein at least one end of the through hole **(H)** is covered over with a mesh member **(31, 32).**

2. The refrigeration-system casing structure of claim 1, wherein the mesh member **(31, 32)** is provided with a piping hole for passage of the piping of the refrigerant circuit and a slit extending from the piping hole to an edge end of the mesh member **(31, 32).**

3. The refrigeration-system casing structure of claim 2, wherein the mesh member **(31, 32)** comprises a plurality of plies each or which is provided with a respective slit which is formed and positioned so as not to overlap with that of the other ply of the mesh member **(31,32).**

4. The refrigeration-system casing structure of any one of claims 1-3,
wherein the mesh member **(31, 32)** is mounted over each end of the through hole **(H);** and
wherein one of the mesh members **(31, 32)** is provided with a nozzle hole for insertion of a nozzle for injecting sealant material into the through hole **(H)** so that the through hole **(H)** is filled from the inside thereof with the injected sealant material.

5. A casing sealing method, intended for a refrigeration, system comprising a casing **(11)** for use in a freezing container and a refrigerant circuit which is configured by piping connection of a compressor **(20)** and a condenser **(14)** which are arranged outside the casing **(11)** to an evaporator **(16)** which is arranged inside the casing **(11),** for sealing of a through hole **(H)** formed in the casing **(11)** and used for insertion of piping of the refrigerant circuit, the casing sealing method comprising:
a first step in which at least one opening end of the through hole **(H)** of the casing **(11)** is covered over with a mesh member **(31, 32);** and
a second step subsequent to the first step in which sealant material is injected into the through hole **(H)** so that the through hole **(H)** is filled from the inside thereof with the injected sealant material.

6. The refrigeration-system casing sealing method of claim 5,
wherein the mesh member **(31, 32)** is provided with a piping hole for insertion of the piping of the refrigerant circuit and a slit extending from the piping hole to an edge end of the mesh member **(31, 32);** and
wherein in the first step the piping of the refrigerant circuit is inserted through the slit of the mesh member **(31, 32)** into the piping hole of the mesh member **(31, 32).**

7. The refrigeration-system casing sealing method of claim 6, wherein the mesh member **(31, 32)** comprises a plurality of plies each of which is provided with a respective slit which is formed and positioned so as not to overlap with that of the other ply of the mesh member **(31, 32)** in the first step.
